# EUROPÄISCHE PATENTSCHRIFT

(11) **EP 3 811 430 B1**
(45) Veröffentlichungstag und Bekanntmachung des Hinweises auf die Patenterteilung: **24.09.2025**
(21) Anmeldenummer: 19723717.5
(22) Anmeldetag: 02.05.2019
(51) Int. Cl.: B60L 50/64, H01M 10/658, H01M 50/224, H01M 50/227, H01M 50/249, H01M 50/30

(54) **FAHRZEUG MIT EINEM HOCHVOLTSPEICHER**
VEHICLE WITH A HIGH-VOLTAGE ACCUMULATOR
VÉHICULE MUNI D'UN ACCUMULATEUR HAUTE TENSION

(30) Priorität: 21.06.2018 DE 102018210152
(43) Veröffentlichungstag der Anmeldung: 28.04.2021
(73) Patentinhaber: Bayerische Motoren Werke Aktiengesellschaft, 80809 München (DE)
(72) Erfinder: RAETTICH, Philip, 87651 Bidingen (DE); TENFELDE, Frank, 80333 München (DE)
(86) Internationale Anmeldenummer: PCT/EP2019/061260
(87) Internationale Veröffentlichungsnummer: WO 2019/242923

(56) Entgegenhaltungen:
- EP-A1- 3 300 164
- CN-A- 107 507 937
- CN-A- 107 507 937
- JP-A- 2012 113 896
- JP-A- 2012 113 896
- US-A1- 2008 241 660
- US-A1- 2013 004 813
- US-A1- 2013 004 813

## Beschreibung

Die vorliegende Erfindung betrifft ein Fahrzeug mit einem Hochvoltspeicher gemäß dem Oberbegriff des Patentanspruches 1.

Ein derartiges Fahrzeug ist aus der JP 2012 113 896 A bekannt. Zum technischen Hintergrund der Erfindung zählen die US 2013/004813 A1 und die CN 107 507 937 A.

Hochvoltspeicher von Elektro- bzw. Hybridfahrzeugen wie z. B. dem Fahrzeug "BMW i3" weisen ein Hochvoltspeichergehäuse mit mehreren darin angeordneten sogenannten "Zellmodulen" auf. Jedes der Zellmodule besteht aus mehreren in einer Reihe hintereinander angeordneten Batteriezellen, die elektrisch miteinander verschaltet sind. Das Gehäuse, in dem die einzelnen Batteriezellen angeordnet sind, ist bei dem BMW i3 ein relativ steifes Aluminiumgehäuse, das "nach oben hin", d.h. in Richtung zur Fahrgastzelle hin, durch einen aufgeschraubten Deckel verschlossen ist.

Die einzelnen Batteriezellen des BMW i3 weisen jeweils ein im Wesentlichen quaderförmiges Batteriezellgehäuse auf. Wenn sich die Batteriezellen in einem ordnungsgemäßen Zustand befinden, ist das Batteriezellgehäuse flüssigkeits- und gasdicht, d. h. aus dem Inneren des Batteriezellgehäuses kann nichts nach außen entweichen.

Sollten, z.B. bei einem extrem starken Unfall, Batteriezellen beschädigt werden und/oder ein Kurzschluss in oder zwischen einzelnen Batteriezellen entstehen und sich das Innere einer Batteriezelle unzulässig stark aufheizen muss eine "Notentgasung" der betroffenen Batteriezellen möglich sein. Hierfür weisen Batteriezellgehäuse üblicherweise eine Notentgasungsöffnung auf, die z. B. als Sollbruchstelle ausgebildet sein kann, welche sich bei Überschreiten eines vorgegebenen Zellinnendrucks öffnet und ein Entweichen von Gas aus dem Inneren der Batteriezelle nach außen ermöglicht. In Extremfällen, wie z. B. bei einer massiven Beschädigung einzelner Batteriezellen, kann in sehr ungünstigen Konstellationen das austretende Gas entflammen, wobei ein Austritt in die Umgebung oder in die Fahrgastzelle des Fahrzeugs mit hoher Sicherheit dadurch verhindert wird, dass die Batteriezellen zusätzlich von dem Gehäuse des Hochvoltspeichers umschlossen sind.

Aufgabe er Erfindung ist es, ein Fahrzeug mit einem Hochvoltspeicher zu schaffen, der im Vergleich zu Fahrzeugen mit herkömmlichen Hochvoltspeichern eine noch größere Sicherheit in Bezug auf eventuelle Brandgefahren bietet.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist die Überlegung, dass bei extremen mechanischen Beschädigungen einzelner Batteriezellen und/oder zellinterner Kurzschlüsse sehr heißes, brennendes Gas aus dem Inneren einzelner Batteriezellen in das Innere des Hochvoltspeichergehäuses über die Notentgasungsöffnungen der Batteriezellgehäuse austreten können soll.

Das Grundprinzip der Erfindung besteht darin, das Hochvoltspeichergehäuse zumindest in denjenigen Bereichen, in denen die Notentgasungsöffnungen der Batteriezellen angeordnet sind, lokal thermisch resistenter zu gestalten. Prinzipiell könnte zwar das gesamte Hochvoltspeichergehäuse, z. B. durch die Wahl eines entsprechend feuerresistenten Materials, wie z. B. Stahl, und hinreichend hohe Wandstärken insgesamt feuerresistent gestaltet werden. Dies ist jedoch aus Sicherheitsgründen nicht zwingend erforderlich und wäre im Übrigen mit einem hohen Gewicht des Hochvoltspeichergehäuses verbunden. Dementsprechend zielt die Erfindung darauf ab, das Gehäuse des Hochvoltspeichers (nur) in denjenigen Bereichen, die in einem Extremfall, d. h. bei einem sogenannten "thermischen Ereignis", thermisch besonders hoch thermisch belastet sind, zu verstärken.

Ausgangspunkt der Erfindung ist ein Fahrzeug mit einem Hochvoltspeicher, der ein Gehäuse und mindestens eine in dem Gehäuse angeordnete Batteriezelle aufweist. Anstatt einer Batteriezelle können in dem Gehäuse natürlich selbstverständlich mehrere bzw. eine Vielzahl von Batteriezellen angeordnet sein, die "paketweise" zu sogenannten "Zellmodulen" miteinander verschaltet sein können.

Die mindestens eine in dem Gehäuse des Hochvoltspeichers angeordnete Batteriezelle weist eine sich ab einem vorgegebenen Zellinnendruck öffnende Notentgasungsöffnung auf, durch die bei einer Störung oder Beschädigung der Batteriezelle heißes oder brennendes Gas aus dem Inneren des Batteriezellgehäuses in das Gehäuse des Hochvoltspeichers entweichen kann. Die Notentgasungsöffnung des Batteriezellgehäuses ist einer Wandung des Gehäuses des Hochvoltspeichers zugewandt, gegen die bei einer Störung oder Beschädigung der Batteriezelle (unmittelbar) heißes oder brennendes Gas strömt.

Wie oben bereits erwähnt, besteht der Kern der Erfindung darin, dass die Wandung des Hochvoltspeichers in dem Bereich, in dem die Notentgasungsöffnung angeordnet ist und bei einer Störung oder Beschädigung der Batteriezelle heißes oder brennendes Gas aus dem Batteriezellgehäuse herausströmt, lokal thermisch resistenter gestaltet ist, als in davon beabstandeten Bereichen der Wandung.

Die Wandung des Gehäuses des Hochvoltspeichers ist also lediglich lokal thermisch verstärkt bzw. thermisch resistenter gestaltet. "Lokal" bedeutet in diesem Zusammenhang, in demjenigen Bereich bzw. in denjenigen Bereichen in denen heißes oder brennendes aus dem Inneren des bzw. der Batteriezellgehäuse austretendes Gas unmittelbar auf die Wandung des Gehäuses des Hochvoltspeichers auftrifft, ähnlich wie dies bei einem brennenden Gasstrahl eines Schweißbrenners der Fall ist.

Die Wandung des Gehäuses des Hochvoltspeichers besteht aus einem Aluminiumblech, welches in dem Bereich, in dem die mindestens eine Notentgasungsöffnung angeordnet ist und bei einer Störung oder Beschädigung der Batteriezelle heißes oder brennendes Gas aus dem Batteriezellgehäuse herausströmt, lokal thermisch resistenter gestaltet ist.

Außerhalb des Rahmens der Erfindung kann die Wandung des Gehäuses des Hochvoltspeichers auch ganz oder zumindest in Teilbereichen aus einem Kunststoffmaterial (oder einem faserverstärkten Kunststoffmaterial) bestehen, welche bzw. welches in dem Bereich, in dem die mindestens eine Notentgasungsöffnung angeordnet ist und bei einer Störung oder Beschädigung der Batteriezelle heißes oder brennendes Gas aus dem Batteriezellgehäuse herausströmt, lokal thermisch resistenter gestaltet ist.

Wie oben bereits erwähnt, kann vorgesehen sein, dass bei einem ordnungsgemäßen Zustand der mindestens einen Batteriezelle das Innere der Batteriezelle durch die Notentgasungsöffnung gasdicht verschlossen ist. Die Notentgasungsöffnung kann z. B. durch eine in dem Batteriezellgehäuse vorgesehene Sollbruchstelle gebildet sein, die erst bei Überschreiten eines vorgegebenen Drucks im Inneren des Batteriezellgehäuses öffnet bzw. "aufgedrückt" oder aufgesprengt wird.

Prinzipiell kann das gesamte Gehäuse des Hochvoltspeichers mit einer zusätzlichen thermisch resistenten Schicht versehen sein. Ein Gedanke der Erfindung besteht darin, dass die Wandung des Hochvoltspeichers im Bereich der mindestens einen Notentgasungsöffnung mindestens eine thermisch resistente Schicht mehr, d.h. mindestens eine zusätzliche thermisch resistente Schicht, aufweist als in davon beabstandeten Bereichen der Wandung.

Beispielsweise kann vorgesehen sein, dass die eine thermisch resistente Schicht oder die mehreren thermisch resistenten Schichten, welche die Wandung des Hochvoltspeichergehäuses lokal thermisch verstärkt bzw. verstärken, in Summe eine Schichtdicke von mindestens 0,1 mm aufweist oder aufweisen.

Um die Wandung des Gehäuses des Hochvoltspeichers lokal zu verstärken, ist erfindungsgemäß vorgesehen, dass die Wandung im Bereich der mindestens einen Notentgasungsöffnung mit einer thermisch resistenten Lackschicht beschichtet ist. "Thermisch resistent" bedeutet in diesem Zusammenhang, dass eine Lackschicht verwendet wird, die zumindest bis zu einer vorgegebenen Mindesttemperatur von beispielsweise 1000° C oder 1100° C oder 1200 °C oder 1300° C thermisch beständig ist. Eine Aktivierung des Lackes durch die auftretende Hitze der Notentgasung kann hierbei als positiver Effekt genutzt werden. So muss der Lack beim Aufbringen auf das Gehäuse beispielsweise nicht eingebrannt werden (speziell bei Keramiklacken) sondern wird nur lackiert. Über die normale Abtrocknung des Lacks wird eine ausreichend hohe Haftung für den Normalbetrieb erreicht. Durch die Hitze der Notentgasung wird dieser dann aktiviert/gebrannt und kann somit seine volle "thermische Resistenz" erreichen. Bei der Lackschicht kann es sich also im eine intumeszierende Schicht ("Dämmschichtbildner") handeln. Intumeszierende Materialien nehmen unter Hitzeeinwirkung an Volumen zu und an Dichte ab. Es kann vorgesehen sein, dass die Schicht unter Hitzeeinwirkung "verkohlt", sich dabei aufbläht und somit wärmeisolierend wirkt.

Erfindungsgemäß ist vorgesehen, dass die Wandung des Gehäuses des Hochvoltspeichers im Bereich der mindestens einen Notentgasungsöffnung mindestens eine thermisch resistente Schicht aufweist, die Schichtsilikate oder Glimmer enthält. Als Schichtsilikate oder Glimmer enthaltende Schicht kann beispielsweise eine Schicht oder Platte verwendet werden, die auf dem Markt unter dem Begriff "Mica"-Schicht bzw. "Mica"-Platte bekannt ist.

Die mindestens eine thermisch resistente Schicht kann mit der Wandung des Gehäuses des Hochvoltspeichers verklebt, verschraubt, vernietet oder in anderer Weise verbunden sein. Die thermisch resistente Schicht kann unmittelbar auf die Wandung des Hochvoltspeichergehäuses aufgebracht sein oder mittels Abstandhalterelementen in einem gewissen Abstand von einigen wenigen mm von der Wandung des Hochvoltspeichergehäuses entfernt angeordnet sein. Wenn die thermisch resistente Schicht mit der Wandung des Gehäuses des Hochvoltspeichers verklebt wird, wird vorzugsweise ein Kleber verwendet, der zumindest bis zu einer Temperatur von mindestens 600 °C thermisch beständig ist und bis zu einer Temperatur von 1200° Celsius nicht brennt.

Alternativ oder ergänzend dazu kann vorgesehen sein, dass die mindestens eine thermisch resistente Schicht ganz oder teilweise mit Material, aus dem die Wandung besteht (z. B. Aluminium, Aluminiumdruckguss) umspritzt und/oder umpresst ist.

Nach einer Weiterbildung der Erfindung ist vorgesehen, dass die mindestens eine im Inneren des Gehäuses des Hochvoltspeichers angeordnet Batteriezelle so angeordnet ist, dass die Notentgasungsöffnung der mindestens einen Batteriezelle einer in Bezug auf die Richtung der Schwerkraft oberen Wandung oder einem Deckel des Hochvoltspeichers zugeordnet ist.

Ferner kann vorgesehen sein, dass die Wandung des Gehäuses des Hochvoltspeichers auf ihrer der Notentgasungsöffnung zugewandten Seite, d. h. auf einer Innenseite des Gehäuses, thermisch resistenter gestaltet ist als in davon beabstandeten Bereichen der Wandung. Vorzugsweise wird die "lokale thermische Verstärkung" also an der Innenseite der Wandung des Hochvoltspeichers angebracht. Dies ist aber nicht zwingend erforderlich. Prinzipiell könnte die Wandung des Hochvoltspeichers auch auf ihrer dem Inneren des Hochvoltspeichergehäuses abgewandten Seite, d. h. auf der Außenseite der Wandung des Hochvoltspeichergehäuses, lokal thermisch verstärkt sein.

Wie oben bereits erwähnt, sind im Gehäuse des Hochvoltspeichers vorzugsweise mehrere bzw. eine Vielzahl von Batteriezellen angeordnet, die jeweils Notentgasungsöffnung aufweisen. Vorzugsweise sind alle Batteriezellen so angeordnet, dass ihre jeweiligen Notentgasungsöffnungen derselben Wandung des Gehäuses (z. B. dem Gehäusedeckel) zugewandt sind. Dementsprechend kann vorgesehen sein, dass die Wandung im Bereich aller Notentgasungsöffnungen thermisch resistenter gestaltet ist, als in davon beabstandeten Bereichen der Innenwand des Gehäuses des Hochvoltspeichers.

Beispielsweise kann vorgesehen sein, dass die mindestens eine thermisch resistente Schicht, mit der die Wandung des Gehäuses des Hochvoltspeichers lokal thermisch verstärkt wird, aus einem Material besteht, das mindestens bis zu einer Temperatur von 1000°C oder 1100°C oder 1200°C oder 1300°C nicht schmilzt oder verbrennt.

Ferner kann vorgesehen sein, dass der thermisch resistenter gestaltete Bereich der Wandung zumindest für eine Zeitdauer von 0,5 Minuten einer Temperatur von bis zu 2000°C, insbesondere bei einer Temperatur von bis zu 1600°C standhält, ohne durchlöchert zu werden oder zu schmelzen.

Bei der mindestens einen thermisch resistenten Schicht kann es sich insbesondere um eine sogenannte "SMC-Schicht" (Sheet molded Compound), d. h. um eine aus mehreren einzelnen Schichten gebildete Schicht handeln. Eine oder mehrere dieser Schichten können z. B. durch Glasfasern und/oder Mineralfasern verstärkte Kunststoffschichten sein.

Im Folgenden wird die Erfindung im Zusammenhang mit der Zeichnung näher erläutert. Es zeigen:

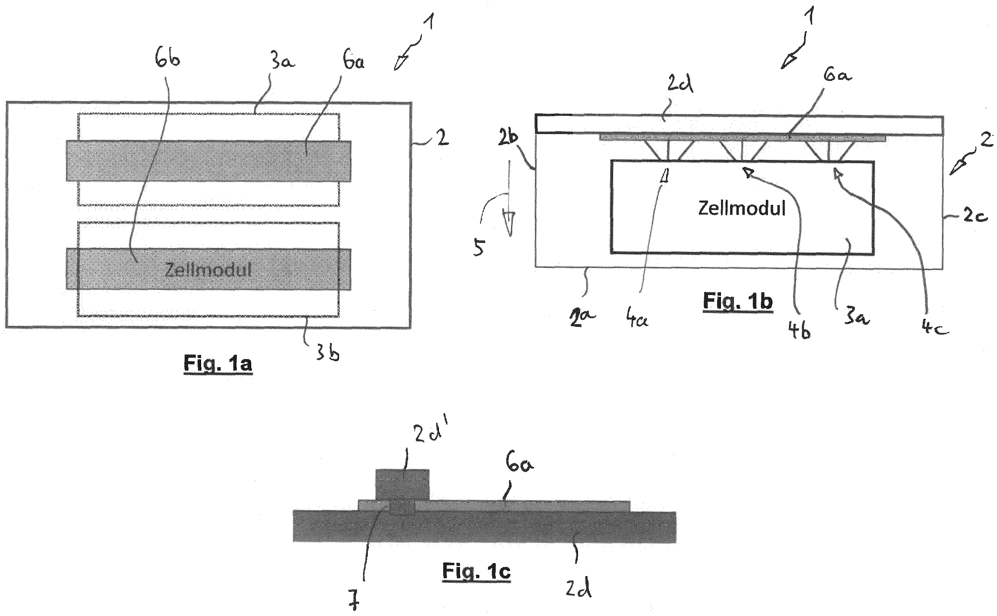

- Figur 1a: eine Draufsicht auf ein erfindungsgemäßes Hochvoltspeichergehäuse in schematischer Darstellung;
- Figur 1b: einen Querschnitt durch ein erfindungsgemäßes Hochvoltspeichergehäuse in schematischer Darstellung;
- Figur 1c: einen Teil einer Wandung eines Hochvoltspeichergehäuses, das lokal durch eine thermisch resistente Schicht verstärkt ist.

Figur 1a zeigt in schematischer Darstellung eine Draufsicht auf einen Hochvoltspeicher 1, der ein Gehäuse 2 aufweist. In dem Gehäuse des Hochvoltspeichers 1 sind zwei Zellemodule 3a, 3b angeordnet. Jedes der beiden Zellmodule 3a, 3b besteht aus mehreren einzelnen hintereinander angeordneten Batteriezellen (nicht im Einzelnen dargestellt), die elektrisch miteinander verschaltet sind. Jede der Batteriezellen weist ein Batteriezellgehäuse auf.

An Oberseiten (aus der Zeichenebene herausgerichtet) der Batteriezellegehäuse weisen die einzelnen Batteriezellgehäuse jeweils eine Notentgasungsöffnung 4a, 4b, 4c (vgl. Figur 1b) auf. Wenn sich die Batteriezellen in ordnungsgemäßem Zustand befinden, sind die Notentgasungsöffnungen geschlossen, d. h. die Batteriezellgehäuse sind dann gasdicht, so dass aus den Inneren der Batteriezellgehäuse nichts, weder Flüssigkeiten noch Gase, entweichen können.

Bei einer Störung oder bei Beschädigungen einzelner Batteriezellen kann es zu zellinternen Kurzschlüssen, zu einem Ansteigen des Zellinnendrucks und zum Entweichen brennbarer bzw. brennender Gase aus dem Inneren einzelner Batteriezellen in das Innere des Gehäuses 2 des Hochvoltspeichers 1 kommen.

Sollte es zu einer Entflammung austretender Gase kommen, können insbesondere im Bereich der Notentgasungsöffnungen 4a, 4b, 4c, d. h. in denjenigen Bereichen, in denen brennende Gase aus den Batteriezellen entweichen, sehr hohe Temperaturen auftreten, ähnlich wie dies bei einem brennenden Gasstrahl eines Schweißgeräts der Fall ist.

Um eine Gefährdung von Personen selbst in solchen Extremszenarien zu vermeiden, ist es wichtig, dass das Gehäuse 2 des Hochvoltspeichers 1 thermisch hinreichend widerstandsfähig ist. Bei Austritt brennender Gase aus einzelnen Batteriezellen treten die größten thermischen Belastungen im Bereich bzw. in unmittelbarer Nähe der Notentgasungsöffnungen auf. Bereits wenige Zentimeter entfernt von den Notentgasungsöffnungen sind die thermischen Belastungen bereits wesentlich geringer.

In Figur 1b ist durch einen Pfeil 5 die Richtung der Schwerkraft dargestellt. Das Gehäuse 2 des Hochvoltspeichers 1 weist einen Boden 2a, Seitenwände 2b, 2c und einen an einer Oberseite des Gehäuses 2 angeordneten Deckel 2d auf. An einer Innenseite des Deckels 2d ist eine thermisch resistente Schicht 6a, 6b angeordnet.

Wie aus Figur 1a ersichtlich ist, erstrecken sich die thermisch resistenten Schichten 6a, 6b nicht über die gesamte Fläche bzw. Innenseite des Deckels 2d, sondern nur über diejenigen Bereiche, in denen die Notentgasungsöffnungen 4a, 4b, 4c der hier nicht näher dargestellten Batteriezellen angeordnet sind.

Die thermisch resistenten Schichten 6a, 6b sind also nur dort vorgesehen, wo sie wirklich gebraucht werden, d. h. dort, wo bei einen thermischen Ereignis die größten thermischen Belastungen auftreten. Weiter beabstandete Bereiche des Deckels 2d bzw. der Seitenwände 2b, 2c oder des Bodens 2a des Gehäuses weisen keine derartige zusätzliche thermisch resistente Schicht auf. Die thermisch resistenten Schichten 6a, 6b sind also nur lokal in den thermisch bei einem Unfall o. ä. am meisten belasteten Bereichen angeordnet. Bei den thermisch resistenten Schichten handelt es sich um Schichten aus Schichtsilikaten oder Glimmer und einem entsprechend thermisch resistenten Lack.

Die thermisch resistenten Schichten 6a, 6b können in sich wiederum aus mehreren einzelnen Schichten aufgebaut sein.

Figur 1c zeigt ein Ausführungsbeispiel, bei dem eine thermisch resistente Schicht 6a an einem Deckel 2d eines hier nicht näher dargestellten Gehäuses 2 eines Hochvoltspeichers 1 angeordnet ist. Die thermisch resistente Schicht 6a weist mehrere Durchgangsöffnungen auf, von denen hier lediglich eine einzige Durchgangsöffnung 7 dargestellt ist. Material des Deckels 2d erstreckt sich propfartig und somit formschlüssig durch die Durchgangsöffnung 7 hindurch. Ein Propf 2d' des Deckelmaterials überkragt formschlüssig das Durchgangsloch 7, wodurch die thermisch resistente Schicht 6a formschlüssig mit dem Deckel 2d verbunden ist. Der Deckel 2d besteht aus Aluminium oder einem Aluminiumgussmaterial.

Die thermisch resistente Schicht kann somit teilweise oder ganz mit Material des Deckels 2d umspritzt oder umpresst sein. Alternativ dazu kann die thermisch resistente Schicht 6a auch mit dem Deckel 2d verklebt, verschraubt, vernietet oder anderer Weise damit verbunden sein.

## Patentansprüche

1. Fahrzeug mit einem Hochvoltspeicher (1), der
- ein Gehäuse (2) und
- mindestens eine in dem Gehäuse (2) angeordnete Batteriezelle aufweist, wobei die mindestens eine Batteriezelle ein Batteriezellgehäuse mit einer sich ab einem vorgegebenen Zellinnendruck öffnenden Notentgasungsöffnung (4a - 4c) aufweist, durch die bei einer Störung oder Beschädigung der Batteriezelle heißes oder brennendes Gas aus dem Inneren des Batteriezellgehäuses in das Gehäuse (2) des Hochvoltspeichers (1) entweichen kann, wobei die Notentgasungsöffnung (4a - 4c) einer Wandung (2d) des Gehäuses (2), gegen die bei einer Störung oder Beschädigung der Batteriezelle heißes oder brennendes Gas strömt, zugewandt ist, wobei
- die Wandung (2d) des Gehäuses (2) des Hochvoltspeichers (1) in dem Bereich, in dem die Notentgasungsöffnung (4a - 4c) angeordnet ist und bei einer Störung oder Beschädigung der Batteriezelle heißes oder brennendes Gas aus dem Batteriezellgehäuse herausströmt, lokal thermisch resistenter gestaltet ist als in davon beabstandeten Bereichen der Wandung (2d), wobei die Wandung (2d) im Bereich der mindestens einen Notentgasungsöffnung (4a - 4c) mindestens eine thermisch resistente Schicht (6a) aufweist, die Schichtsilikate oder Glimmer enthält und wobei die Wandung (2d) im Bereich der mindestens einen Notentgasungsöffnung (4a - 4c) mit einer thermisch resistenten Lackschicht beschichtet ist, und wobei die Wandung (2d) aus Aluminiumblech besteht, welches in dem Bereich, in dem die Notentgasungsöffnung (4a, 4c) angeordnet ist und bei einer Störung oder Beschädigung der Batteriezelle heißes oder brennendes Gas aus dem Batteriezellgehäuse herausströmt, lokal thermisch resistenter gestaltet ist.

2. Fahrzeug nach Anspruch 1, **dadurch gekennzeichnet, dass** die Notentgasungsöffnung bei ordnungsgemäßem Zustand der Batteriezelle gasdicht verschlossen ist.

3. Fahrzeug nach einem der Ansprüche 1 bis 2, **dadurch gekennzeichnet, dass** die Notentgasungsöffnung durch eine Sollbruchstelle gebildet ist, die bei Überschreiten eines vorgegebenen Drucks im Inneren des Batteriezellgehäuses öffnet.

4. Fahrzeug nach einem der Ansprüche 1 bis 3, **dadurch gekennzeichnet, dass** die Wandung (2d) im Bereich der mindestens einen Notentgasungsöffnung (4a - 4c) mindestens eine thermisch resistente Schicht (6a) mehr aufweist als in davon beabstandeten Bereichen der Wandung (2d).

5. Fahrzeug nach Anspruch 4, **dadurch gekennzeichnet, dass** die mindestens eine thermisch resistente Schicht oder die mehreren thermisch resistenten Schichten in Summe eine Schichtdicke von mindestens 0,1 mm aufweist oder aufweisen.

6. Fahrzeug nach einem der Ansprüche 1 bis 5, **dadurch gekennzeichnet, dass** die mindestens eine thermisch resistente Schicht (6a) mit der Wandung (2d) verklebt ist.

7. Fahrzeug nach Anspruch 6, **dadurch gekennzeichnet, dass** der Kleber ein Kleber ist, der zumindest bis zu einer Temperatur von 600°C beständig ist und bis zu einer Temperatur von 1200°C nicht brennt.

8. Fahrzeug nach einem der Ansprüche 1 bis 7, **dadurch gekennzeichnet, dass** die mindestens eine thermisch resistente Schicht (6a) mit der Wandung (2d) verschraubt und/oder vernietet ist.

9. Fahrzeug nach einem der Ansprüche 1 bis 8, **dadurch gekennzeichnet, dass** die mindestens eine thermisch resistente Schicht (6a) teilweise oder ganz mit Material, aus dem die Wandung (2d) besteht, umspritzt und/oder umpresst ist.

10. Fahrzeug nach einem der Ansprüche 1 bis 9, **dadurch gekennzeichnet, dass** die mindestens eine Batteriezelle so angeordnet ist, dass die Notentgasungsöffnung (4a - 4c) in Bezug auf die Richtung (5) der Schwerkraft einer oberen Wandung (2d) oder einem Deckel des Hochvoltspeichers (1) zugewandt ist.

11. Fahrzeug nach einem der Ansprüche 1 bis 10, **dadurch gekennzeichnet, dass** die Wandung (2d) auf ihrer der Notentgasungsöffnung zugewandten Seite, die eine Innenseite des Gehäuses (2) ist, thermisch resistenter gestaltet ist als in davon beabstandeten Bereichen der Wandung (2d).

12. Fahrzeug nach einem der Ansprüche 1 bis 11, **dadurch gekennzeichnet, dass** in dem Gehäuse (2) des Hochvoltspeichers (1) mehrere Batteriezellen angeordnet sind, deren Gehäuse jeweils eine Notentgasungsöffnung aufweisen.

13. Fahrzeug nach Anspruch 12, **dadurch gekennzeichnet, dass** alle Batteriezellen so angeordnet sind, dass ihre jeweiligen Notentgasungsöffnungen (4a - 4c) derselben Wandung (2d) des Gehäuses (2) zugewandt sind.

14. Fahrzeug nach einem der Ansprüche 12 oder 13, **dadurch gekennzeichnet, dass** die Wandung (2d) im Bereich aller Notentgasungsöffnungen (4a - 4c) thermisch resistenter gestaltet ist als in davon beabstandeten Bereichen der Wandung (2d) des Gehäuses (2).

15. Fahrzeug nach einem der Ansprüche 1 bis 14, **dadurch gekennzeichnet, dass** die mindestens eine thermisch resistente Schicht aus einem Material besteht, das mindestens bis zu einer Temperatur von 1000°C oder 1100°C oder 1200°C oder 1300°C nicht schmilzt und nicht verbrennt.

16. Fahrzeug nach einem der Ansprüche 1 bis 15, **dadurch gekennzeichnet, dass** der thermisch resistenter gestaltete Bereich (6a, 6b) der Wandung (2d) zumindest für eine Zeitdauer von 0,5 Minuten einer Temperatur von bis zu 2000°C, insbesondere einer Temperatur von bis zu 1600°C, standhalten kann, ohne durchlöchert bzw. verbrannt zu werden.

## Claims

1. Vehicle with a high-voltage storage device (1), which
• has a housing (2) and
• at least one battery cell arranged in the housing (2), wherein the at least one battery cell has a battery cell housing with an emergency degassing opening (4a - 4c) that opens at a predetermined cell internal pressure, through which, in the event of a malfunction or damage to the battery cell, hot or burning gas can escape from the interior of the battery cell housing into the housing (2) of the high-voltage storage device (1), wherein the emergency degassing opening (4a - 4c) faces a wall (2d) of the housing (2) against which hot or burning gas flows in the event of a malfunction or damage to the battery cell, wherein
• the wall (2d) of the housing (2) of the high-voltage storage device (1) in the area where the emergency degassing opening (4a - 4c) is arranged and where hot or burning gas flows out of the battery cell housing in the event of a malfunction or damage to the battery cell, is locally designed to be more thermally resistant than in areas spaced apart from it of the wall (2d), wherein the wall (2d) in the area of the at least one emergency degassing opening (4a - 4c) has at least one thermally resistant layer (6a) containing layer silicates or mica and wherein the wall (2d) in the area of the at least one emergency degassing opening (4a - 4c) is coated with a thermally resistant lacquer layer, and wherein the wall (2d) consists of aluminum sheet which, in the area where the emergency degassing opening (4a, 4c) is arranged and where hot or burning gas flows out of the battery cell housing in the event of a malfunction or damage to the battery cell, is locally designed to be more thermally resistant.

2. Vehicle according to claim 1, **characterized in that** the emergency degassing opening is gas-tightly sealed when the battery cell is in proper condition.

3. Vehicle according to one of claims 1 to 2, **characterized in that** the emergency degassing opening is formed by a predetermined breaking point that opens when a predetermined pressure in the interior of the battery cell housing is exceeded.

4. Vehicle according to one of claims 1 to 3, **characterized in that** the wall (2d) in the area of the at least one emergency degassing opening (4a - 4c) has at least one more thermally resistant layer (6a) than in areas spaced apart from it of the wall (2d).

5. Vehicle according to claim 4, **characterized in that** the at least one thermally resistant layer or the multiple thermally resistant layers have or has a total layer thickness of at least 0.1 mm.

6. Vehicle according to one of claims 1 to 5, **characterized in that** the at least one thermally resistant layer (6a) is adhesively bonded to the wall (2d).

7. Vehicle according to claim 6, **characterized in that** the adhesive is an adhesive that is resistant to at least a temperature of 600°C and does not burn up to a temperature of 1200°C.

8. Vehicle according to one of claims 1 to 7, **characterized in that** the at least one thermally resistant layer (6a) is screwed and/or riveted to the wall (2d).

9. Vehicle according to one of claims 1 to 8, **characterized in that** the at least one thermally resistant layer (6a) is partially or completely overmolded and/or overpressed with material from which the wall (2d) is made.

10. Vehicle according to one of claims 1 to 9, **characterized in that** the at least one battery cell is arranged such that the emergency degassing opening (4a - 4c) faces an upper wall (2d) or a lid of the high-voltage storage device (1) with respect to the direction (5) of gravity.

11. Vehicle according to one of claims 1 to 10, **characterized in that** the wall (2d) on its side facing the emergency degassing opening, which is an inner side of the housing (2), is designed to be more thermally resistant than in areas spaced apart from it of the wall (2d).

12. Vehicle according to one of claims 1 to 11, **characterized in that** several battery cells are arranged in the housing (2) of the high-voltage storage device (1), whose housings each have an emergency degassing opening.

13. Vehicle according to claim 12, **characterized in that** all battery cells are arranged such that their respective emergency degassing openings (4a - 4c) face the same wall (2d) of the housing (2).

14. Vehicle according to one of claims 12 or 13, **characterized in that** the wall (2d) in the area of all emergency degassing openings (4a - 4c) is designed to be more thermally resistant than in areas spaced apart from it of the wall (2d) of the housing (2).

15. Vehicle according to one of claims 1 to 14, **characterized in that** the at least one thermally resistant layer is made of a material that does not melt and does not burn at least up to a temperature of 1000°C or 1100°C or 1200°C or 1300°C.

16. Vehicle according to one of claims 1 to 15, **characterized in that** the more thermally resistant designed area (6a, 6b) of the wall (2d) can withstand a temperature of up to 2000°C, in particular a temperature of up to 1600°C, for at least a duration of 0.5 minutes without being perforated or burned.

## Revendications

1. Véhicule avec un dispositif de stockage haute tension (1), qui
• comprend un boîtier (2) et
• au moins une cellule de batterie disposée dans le boîtier (2), ladite au moins une cellule de batterie ayant un boîtier de cellule de batterie avec une ouverture de dégazage d'urgence (4a - 4c) s'ouvrant à partir d'une pression interne de cellule prédéterminée, à travers laquelle, en cas de dysfonctionnement ou d'endommagement de la cellule de batterie, du gaz chaud ou brûlant peut s'échapper de l'intérieur du boîtier de cellule de batterie dans le boîtier (2) du dispositif de stockage haute tension (1), l'ouverture de dégazage d'urgence (4a - 4c) étant orientée vers une paroi (2d) du boîtier (2) contre laquelle du gaz chaud ou brûlant s'écoule en cas de dysfonctionnement ou d'endommagement de la cellule de batterie, dans lequel
• la paroi (2d) du boîtier (2) du dispositif de stockage haute tension (1) dans la zone où l'ouverture de dégazage d'urgence (4a - 4c) est disposée et où du gaz chaud ou brûlant s'écoule du boîtier de cellule de batterie en cas de dysfonctionnement ou d'endommagement de la cellule de batterie, est conçue localement pour être plus résistante thermiquement que dans les zones espacées de celle-ci de la paroi (2d), la paroi (2d) dans la zone de l'au moins une ouverture de dégazage d'urgence (4a - 4c) ayant au moins une couche thermiquement résistante (6a) contenant des silicates en couches ou du mica et la paroi (2d) dans la zone de l'au moins une ouverture de dégazage d'urgence (4a - 4c) étant revêtue d'une couche de laque thermiquement résistante, et la paroi (2d) étant constituée de tôle d'aluminium qui, dans la zone où l'ouverture de dégazage d'urgence (4a, 4c) est disposée et où du gaz chaud ou brûlant s'écoule du boîtier de cellule de batterie en cas de dysfonctionnement ou d'endommagement de la cellule de batterie, est conçue localement pour être plus résistante thermiquement.

2. Véhicule selon la revendication 1, **caractérisé en ce que** l'ouverture de dégazage d'urgence est hermétiquement fermée lorsque la cellule de batterie est en bon état.

3. Véhicule selon l'une des revendications 1 à 2, **caractérisé en ce que** l'ouverture de dégazage d'urgence est formée par un point de rupture prédéterminé qui s'ouvre lorsqu'une pression prédéterminée à l'intérieur du boîtier de cellule de batterie est dépassée.

4. Véhicule selon l'une des revendications 1 à 3, **caractérisé en ce que** la paroi (2d) dans la zone de l'au moins une ouverture de dégazage d'urgence (4a - 4c) a au moins une couche thermiquement résistante (6a) de plus que dans les zones espacées de celle-ci de la paroi (2d).

5. Véhicule selon la revendication 4, **caractérisé en ce que** l'au moins une couche thermiquement résistante ou les plusieurs couches thermiquement résistantes ont ou a une épaisseur totale de couche d'au moins 0,1 mm.

6. Véhicule selon l'une des revendications 1 à 5, **caractérisé en ce que** l'au moins une couche thermiquement résistante (6a) est collée à la paroi (2d).

7. Véhicule selon la revendication 6, **caractérisé en ce que** l'adhésif est un adhésif qui résiste au moins à une température de 600°C et ne brûle pas jusqu'à une température de 1200°C.

8. Véhicule selon l'une des revendications 1 à 7, **caractérisé en ce que** l'au moins une couche thermiquement résistante (6a) est vissée et/ou rivetée à la paroi (2d).

9. Véhicule selon l'une des revendications 1 à 8, **caractérisé en ce que** l'au moins une couche thermiquement résistante (6a) est partiellement ou entièrement surmoulée et/ou surpressée avec le matériau dont est constituée la paroi (2d).

10. Véhicule selon l'une des revendications 1 à 9, **caractérisé en ce que** l'au moins une cellule de batterie est disposée de telle sorte que l'ouverture de dégazage d'urgence (4a - 4c) soit orientée vers une paroi supérieure (2d) ou un couvercle du dispositif de stockage haute tension (1) par rapport à la direction (5) de la gravité.

11. Véhicule selon l'une des revendications 1 à 10, **caractérisé en ce que** la paroi (2d) sur son côté faisant face à l'ouverture de dégazage d'urgence, qui est un côté intérieur du boîtier (2), est conçue pour être plus résistante thermiquement que dans les zones espacées de celle-ci de la paroi (2d).

12. Véhicule selon l'une des revendications 1 à 11, **caractérisé en ce que** plusieurs cellules de batterie sont disposées dans le boîtier (2) du dispositif de stockage haute tension (1), dont les boîtiers ont chacun une ouverture de dégazage d'urgence.

13. Véhicule selon la revendication 12, **caractérisé en ce que** toutes les cellules de batterie sont disposées de telle sorte que leurs ouvertures de dégazage d'urgence respectives (4a - 4c) soient orientées vers la même paroi (2d) du boîtier (2).

14. Véhicule selon l'une des revendications 12 ou 13, **caractérisé en ce que** la paroi (2d) dans la zone de toutes les ouvertures de dégazage d'urgence (4a - 4c) est conçue pour être plus résistante thermiquement que dans les zones espacées de celle-ci de la paroi (2d) du boîtier (2).

15. Véhicule selon l'une des revendications 1 à 14, **caractérisé en ce que** l'au moins une couche thermiquement résistante est constituée d'un matériau qui ne fond pas et ne brûle pas au moins jusqu'à une température de 1000°C ou 1100°C ou 1200°C ou 1300°C.

16. Véhicule selon l'une des revendications 1 à 15, **caractérisé en ce que** la zone conçue pour être plus résistante thermiquement (6a, 6b) de la paroi (2d) peut résister à une température allant jusqu'à 2000°C, en particulier une température allant jusqu'à 1600°C, pendant au moins une durée de 0,5 minute sans être perforée ou brûlée.
